# EUROPEAN PATENT SPECIFICATION

(11) **EP 0 479 921 B1**
(45) Date of publication and mention of the grant of the patent: **23.03.1994**
(21) Application number: 90912538.7
(22) Date of filing: 28.06.1990
(51) Int. Cl.: F16K 1/22

(54) **FLIGHT CRAFT WITH FLUID SYSTEMS WHICH INCORPORATE BUTTERFLY VALVES, AND BUTTERFLY VALVE METHODS AND APPARATUS**
FLUGZEUG MIT DREHKLAPPENVENTIL-FLUIDSYSTEM UND DREHKLAPPENVENTILVERFAHREN UND -VORRICHTUNG
AERONEF AVEC SYSTEMES HYDRAULIQUES INCORPORANT DES SOUPAPES PAPILLONS, ET PROCEDES ET APPAREIL UTILISANT DE TELLES SOUPAPES PAPILLONS

(30) Priority: 30.06.1989 US 374897; 17.08.1989 US 395234; 16.10.1989 US 422354; 24.10.1989 US 426921; 06.06.1990 US 533965; 15.06.1990 US 538809; 26.06.1990 US 543991
(43) Date of publication of application: 15.04.1992
(73) Proprietor: AlliedSignal Inc., Morristown, New Jersey 07962-2245 (US)
(72) Inventor: BALL, Larry, K., Chandler, AZ 85226 (US); HINES, Marshall, U., Scottsdale, AZ 85254 (US); TERVO, John, N., Scottsdale, AZ 85253 (US)
(74) Representative: Brock, Peter William
(86) International application number: US9003641
(87) International publication number: WO9100459

## Description

The present invention relates generally to fluid systems and more specifically to butterfly valves for use therein.

US-A-3498583 discloses a hybrid butterfly-poppet valve in which the valve plate is linearly movable in directions perpendicular thereto, the linear movement being used to effect seating and unseating of the valve plate.

EP-A-0270414 discloses the use of valves in a fluid system which actuates control surfaces of an aircraft.

In butterfly valves, translational movement of the valve plate relative to the pivot mechanism can be used to effect dynamic torque balancing, and to facilitate actuation by using the torque exerted by fluid on the plate to rotate the latter. To applicants' knowledge, these principles were first set forth in US patent application, serial no. 374,897, filed on June 30, 1989, from which priority is claimed. They are schematically illustrated in FIGS. 12A-12C of the present application, wherein numerals 20, 22, 24, 26, and 28 indicate a valve plate, a pivot shaft, a duct, a bracket intersecuring the shaft and plate, and the direction of flow respectively. Arrow 30 and numeral 32 indicate the center of pressure associated with the forces exerted by fluid on the plate 20, and the pivot axis about which the plate is pivotable.

In FIG. 12A, the shaft 22 is centered in relation to the longitudinal dimension of the plate 20 and the plate is in a closed position. The center of pressure 30 is aligned with the pivot axis 32, so the net torque exerted by the fluid on the plate 20 is zero. If the plate 20 is rotated to an open position as illustrated in FIG. 12B, and translated relative to the shaft 22 so that the center of pressure 30 is aligned with the pivot axis 32 as illustrated in FIG. 12C, then the plate is effectively torque-balanced and the flow rate associated with the rotational angle 34 can be maintained with minimal input force required from the actuator 36. If the translational movement is too limited in range to achieve torque balancing at all rotational positions of the plate 20, it can still be used to advantage in minimizing the net torque exerted by the fluid, thus still minimizing the input force required from the actuator 36.

If it is desired to change the rotational angle 34, then the plate 20 can be translated relative to the shaft 22 in the appropriate direction to effect a misalignment of the center of pressure 30 with the pivot axis 32, thus increasing the net fluid dynamic torque, and the force required to effect the change is exerted in whole or in part by the fluid conveyed in the duct 24.

Butterfly valves such as those described above can be beneficially used in a variety of applications such as aircraft, spacecraft or space stations, oil pipelines, and process pipelines generally, to name a few. The primary benefit to be derived in a specific application may differ from that to be derived in another, although all such benefits are attributable to the reduction of fluid dynamic torque. For example, reductions in weight, volume, and/or energy usage (all resulting from the use of smaller actuators) may be the primary benefits associated with aerospace vehicles, whereas a reduction in valve failures attributable to high torque loads may be a primary benefit associated with process pipelines.

One embodiment of this invention provides a fluid system installed aboard a flight craft, the fluid system comprising a source of pressurized fluid, a duct forming a flow path extending from the source to a location of use aboard the craft, and a valve interposed in the flow path between the source and the location of use.

According to this embodiment of the invention the valve is a butterfly valve having a rotatable valve member and defining a pivot axis for the valve member, the valve member being secured to the duct so as to be rotatable in the flow path over a range of rotational positions that variably permits fluid flow from the source though the valve and to the location of use, the valve being structurally adapted to provide for relative translational movement between the valve member and the pivot axis in directions substantially parallel to the former and substantially perpendicular to the latter, whereby torque applied by the fluid on the valve member and about the pivot axis is alterable at each of a multiplicity of the rotational positions in response to the translational movement.

Another embodiment of the invention provides a butterfly valve in which a valve plate is selectively positionable within a range of rotational positions at which flow of fluid is permitted through the valve, the valve defining at each of the rotational positions in the range a pivot axis about which the valve plate is pivotable and which geometrically divides a surface of the valve plate into two areas. This valve is structurally adapted to provide for relative translational movement between the valve plate and the pivot axis in directions substantially parallel to the valve plate and substantially perpendicular to the pivot axis such that the movement effects a decrease in one of the two areas and a corresponding increase in the other area, whereby the valve is operable at a multiplicity of the rotational positions of the valve plate to controllably alter torque exerted by the fluid on the valve plate and about the pivot axis.

A further embodiment of the invention provides a method for facilitating control of a butterfly valve though which a fluid is being conveyed, wherein the valve comprises a valve plate which is rotationally positionable in a flow path to modulate flow of the fluid, and a pivot mechanism cooperating with the valve plate to define a pivot axis that geometrically divides a surface of the plate into two areas, the valve plate being pivotable about the axis so that the fluid exerts a net torque on the valve plate, which method comprises, for a plurality of different rotational positions of the valve plate which permit fluid flow though the valve, decreasing the net torque by effecting relative translational movement between the pivot mechanism and the valve plate in a direction substantially parallel to the latter and substantially perpendicular to the pivot mechanism, wherein the translational movement is effected in a manner which increases one of the two areas and decreases the other.

The advantages associated with the movement which effects an increase in the surface area of the valve plate which is disposed on one side of the pivot axis, and a decrease in the surface area disposed on the opposite side of the pivot axis have been generally described.

Typically, the fluid system further comprises an actuator operably connected to the butterfly valve to control the latter in response to command signals received from an electronic control system, and at least one sensor positioned downstream from the butterfly valve to supply sensor data to the control system, the data being indicative of a physical characteristic (e.g. flow rate, pressure, temperature) of the fluid.

### BRIEF DESCRIPTION OF THE DRAWINGS

FIG. 1 is a perspective view of an assembled butterfly valve. Actuation of the valve is diagrammatically represented.

FIG. 2 is an exploded perspective view of the butterfly valve illustrated in FIG. 1.

FIG. 3 is a partially elevational, partially cross-sectional, and partially exploded view of various components illustrated in FIG. 2, including a pivot mechanism and a differential gear.

FIGS. 4-6 are cross-sectional views taken along the lines indicated in FIG. 3.

FIG. 7 is an elevational and truncated view of the pivot mechanism illustrated in FIG. 3.

FIG. 8 is a top elevation of the valve plate illustrated in FIGS. 1 and 2.

FIG. 9 is a side elevation, in partial cross-section, of the valve plate illustrated in FIG. 8.

FIG. 10 is a partial, cross-sectional and partially elevational view of the butterfly valve illustrated in FIG. 1, as viewed in a direction parallel to both the valve plate and the pivot mechanism.

FIG. 11 is an elevational and partially fragmented view taken along lines 11-11 of FIG. 10.

FIGS. 12A-12H are schematic illustrations of a butterfly valve in which the valve plate is translationally movable relative to the pivot mechanism, and shows various rotational and translational positions of the valve plate. These are provided for the purpose of illustrating the principles and use of a butterfly valve in accordance with the invention.

FIG. 13 is a schematic illustration wherein the butterfly valve of FIG. 1 incorporates a contemplated sealing arrangement in an application demanding a sealing function.

FIG. 14 is a partially fragmentary, cross-sectional view of another butterfly valve adapted for use with the invention. Actuation of the valve is diagrammatically represented.

FIG. 15 is a cross-sectional view taken along line 15-15 of FIG. 14 with the valve plate near its closed rotational position.

FIG. 16 is a partially fragmentary cross-sectional view taken along line 16-16 of FIG. 14 and illustrates in elevation certain power transmission components for use in controlling the position of the pivot shaft.

FIG. 17 is a cross-sectional view taken along line 17-17 of FIG. 14 and illustrates slots adapted to permit movement of the valve plate and pivot shaft.

FIG. 18 corresponds in kind to FIG. 15 and shows the valve plate at a fully-open rotational position.

FIG. 19 corresponds in kind to FIG. 16 with the valve plate in the rotational position indicated in FIG. 18.

FIG. 20 corresponds in kind to FIG. 17 with the valve plate in the rotational position indicated in FIG. 18.

FIG. 21 is a partially perspective and partially schematic drawing depicting a fluid system installed aboard a flight craft.

FIG. 22 is a schematic illustration of the fluid system depicted in FIG. 21.

### BEST MODE FOR CARRYING OUT THE INVENTION

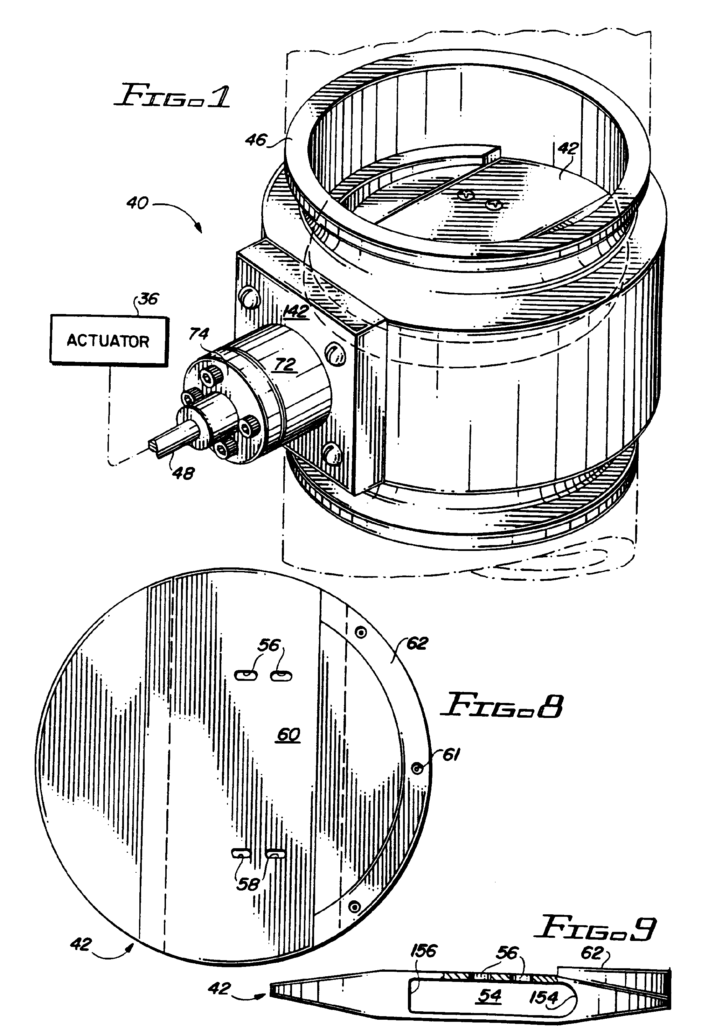

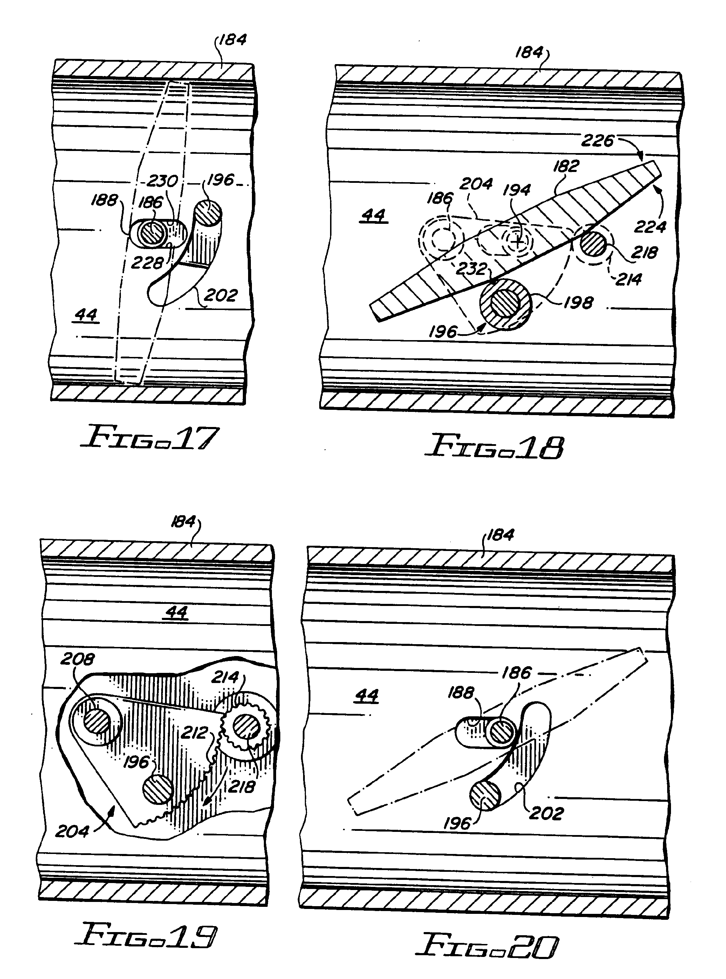

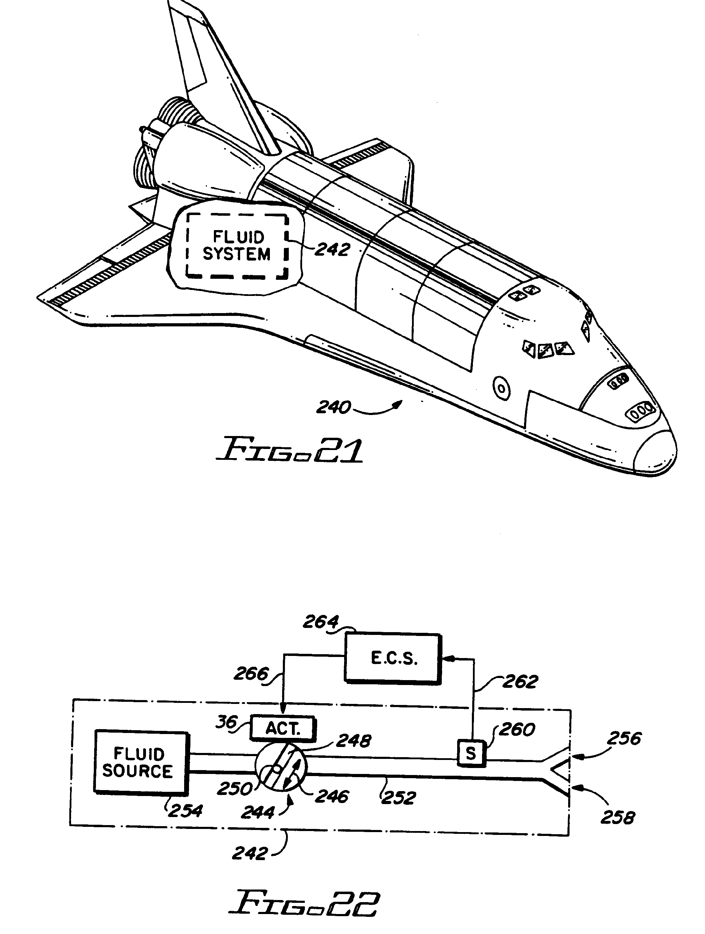

FIG. 1 of the accompanying drawings illustrates a butterfly valve 40 which is operable via an external actuator 36 to control the position of a valve plate 42. The valve plate 42 is pivotally disposed in and transects a flow path 44 (FIG. 10) defined by a mounting body 46.

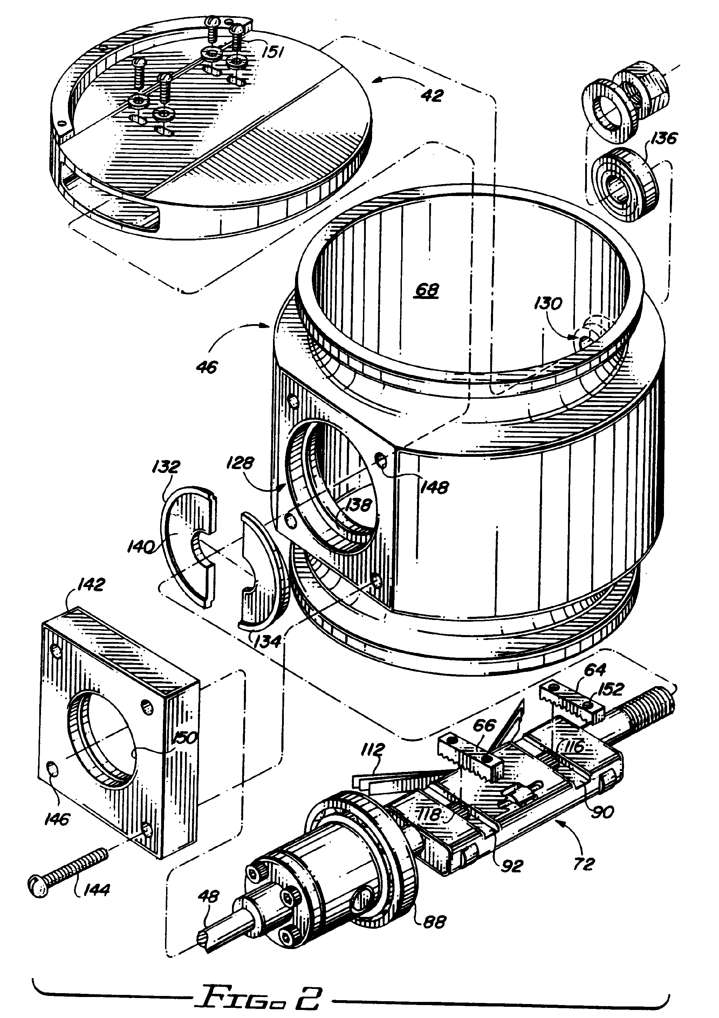

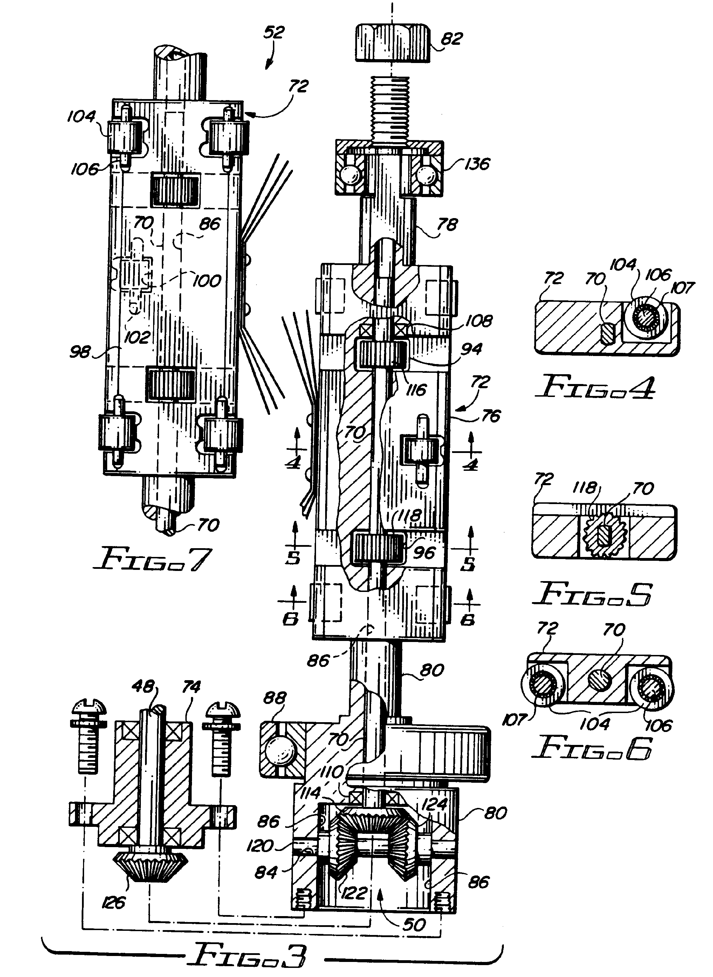

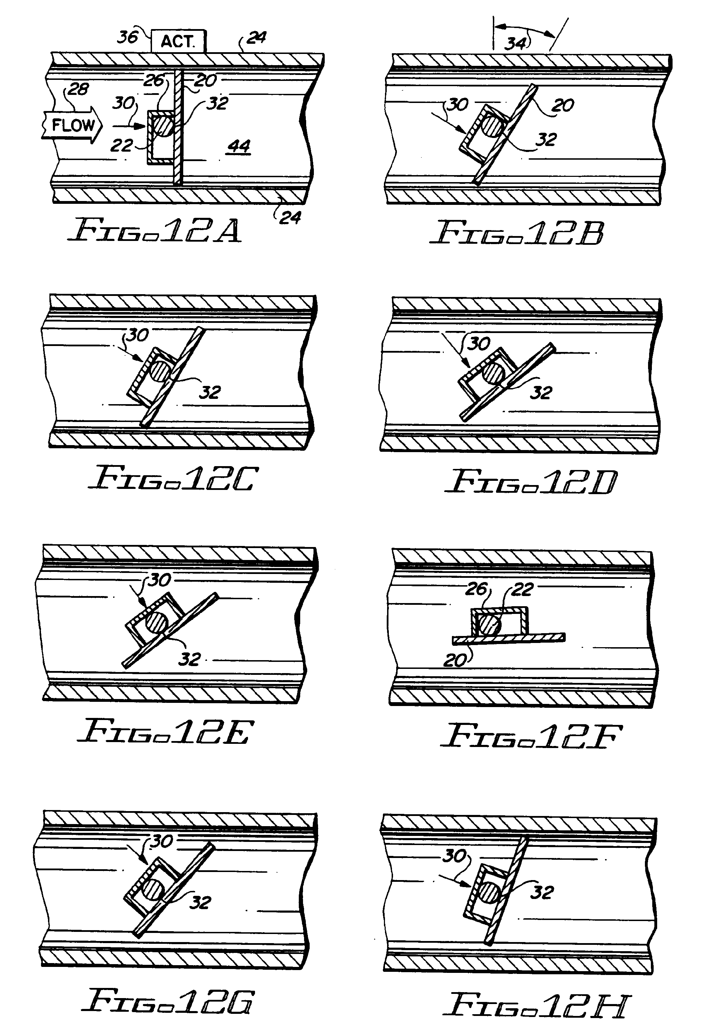

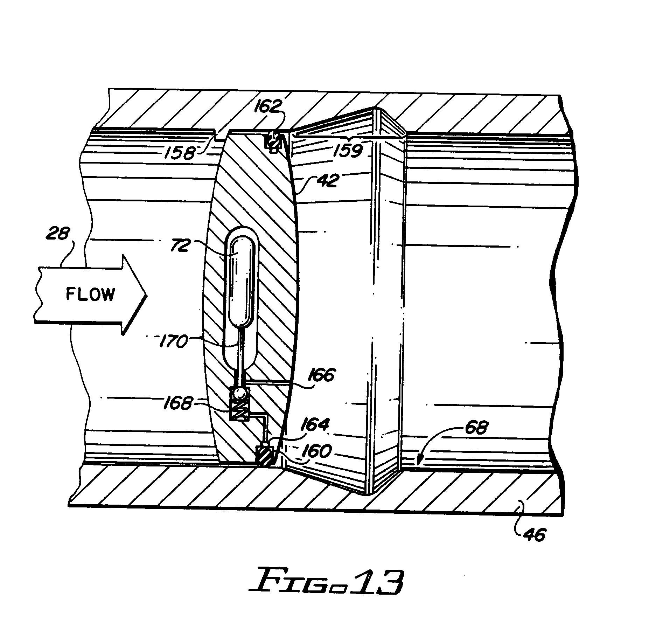

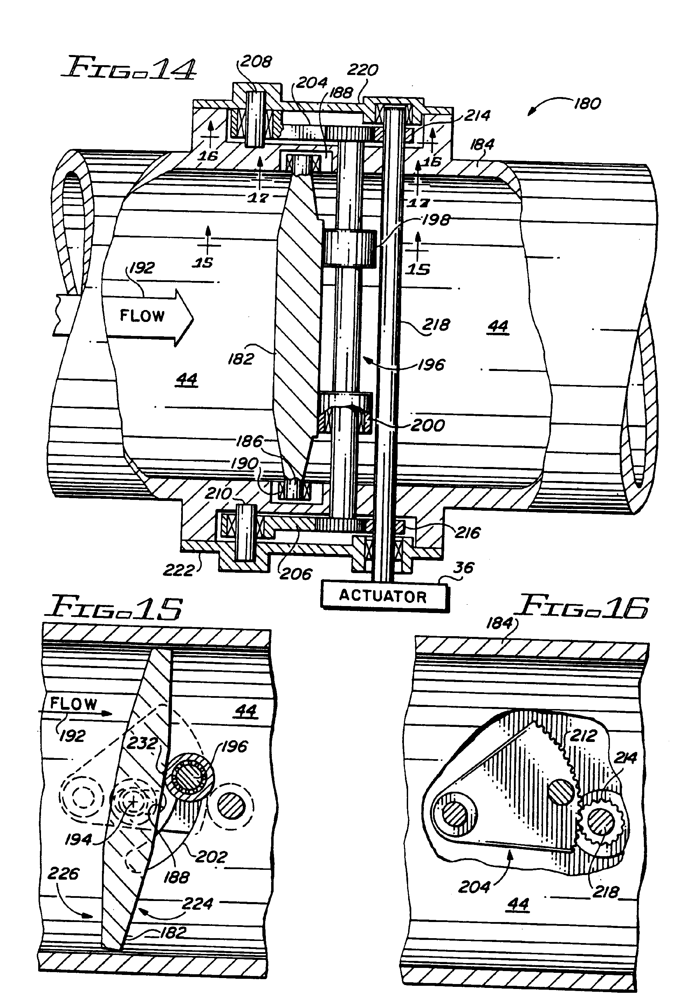

In use, duct members (not shown) are secured to the mounting body 46 to define an elongate flow path along which a fluid is conveyed from a source thereof, through the valve 40, and to one or more points of use. Fluid flow is controlled by rotationally positioning the valve plate 42. The positioning is achieved in response to torque applied by the actuator 36 to an input shaft 48. This torque is transmitted through a differential gear 50 (FIG. 3, hereinafter "differential") to a pivot mechanism 52 (FIG. 7) which pivotally supports the valve plate 42 and is journalled in the mounting body 46.

FIGS. 8 and 9 illustrate the valve plate 42 in more detail. The diameter of the circular valve plate 42 is slightly less than the inside diameter of the mounting body 46 in order to accommodate translational movement of the plate in the flow path 44. Translational movement of the valve plate 42 relative to the pivot mechanism 52 (FIG. 7) is accommodated by a suitably dimensioned cavity 54 extending through the plate as indicated. Slots 56, 58 are formed between the downstream-facing surface 60 of the plate and the cavity 54. Small tapped bores (not shown) extending into the plate receive screws 61 that secure an arcuate fence 62 to the plate near the leading edge of the latter. The slots 56, 58 are provided for securement of a pair of rack gears 64, 66 (FIG. 2) to the plate 42.

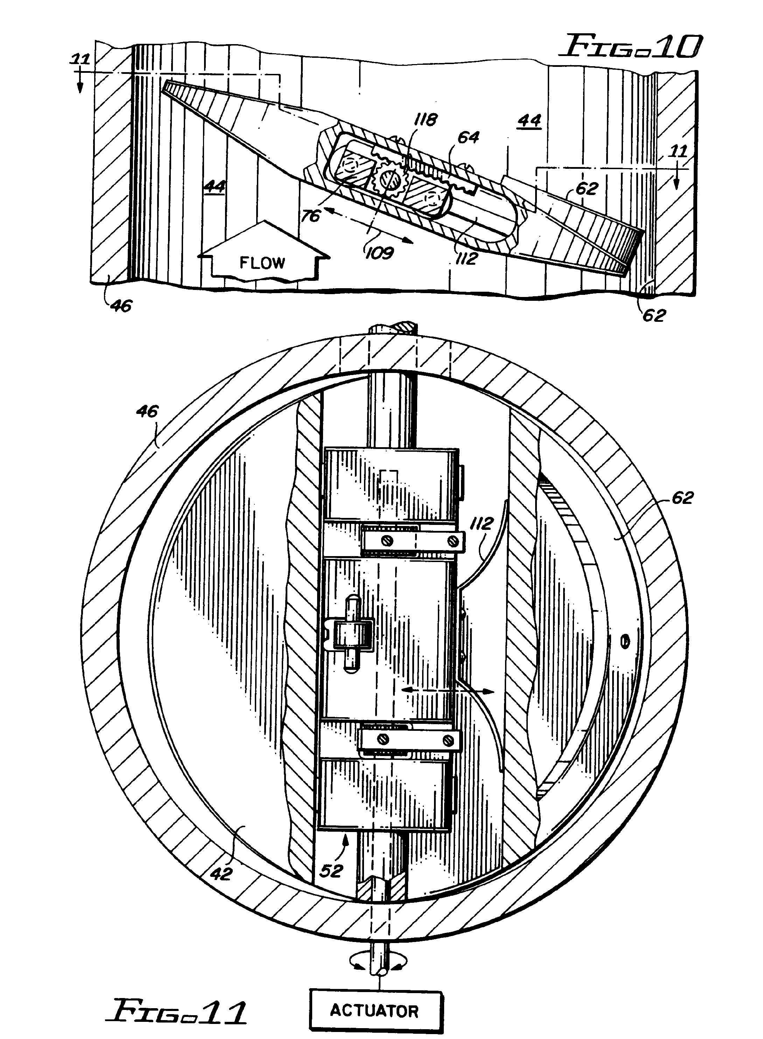

FIGS. 2, 3, and 7 illustrate the pivot mechanism 52 and differential 50 in detail. The pivot mechanism 52 comprises a center shaft 70 and a carrier shaft 72 (hereinafter, "carrier"). The carrier 72 has a centrally-disposed oblong portion 76 and two cylindrical end portions 78, 80. One end portion 78 is threaded for engagement with a nut 82, and the other end portion 80 has a transversely-extending bore 84 formed therethrough. A longitudinally-extending stepped bore 86 is formed in the carrier 72 to accommodate receipt of the center shaft 70 and to provide a housing for the differential 50. The bore 86 is sufficiently large in diameter to permit rotation of the center shaft 70 therein. Transverse slots 90, 92 are milled in the central portion 76, and through-slots 94, 96 are formed from the transverse slots to the upstream-facing surface 98 of the carrier. The through-slots 94, 96 intersect the longitudinally extending bore 86 as indicated. Five deep recesses (as at 100) and associated cross-slots (as at 102) are milled in the carrier 72 for installation of five rollers (as at 104). Each roller 104 is rotatably secured to a small shaft (as at 106) via needle bearings 107 (FIG. 6). The shaft 106 is force-fitted in the cross-slot 102. The rollers 104 function as bearings to minimize friction between the carrier 72 and the valve plate 42 during translational movement 109 (FIG. 10) of the latter. The longitudinally-extending bore 86 is enlarged at two locations and bearings 108, 110 are inserted. A bearing 88 is also pressed onto the cylindrical portion 80 as shown. A leaf spring 112 is rigidly secured to the edge of the carrier 72 via screws extending into tapped bores. (Note: Although the illustrated prototype incorporates the leaf spring 112, it is believed that a more robust biasing mechanism is preferable for most applications. Accordingly, the leaf spring 112 can be replaced by two suitably mounted and positioned coil springs, or such other functionally equivalent biasing means as are required in a given application).

A first bevel gear 114 of the differential 50 is pressed onto the center shaft 70 near the indicated end which extends into the differential housing. The center shaft 70 is received in the longitudinally-extending bore 86 and extends through the bearings 108, 110, and through two pinion gears 116, 118 positioned in the through-slots 94, 96 as illustrated.

A cross-shaft 120 is pressed through the cross-bore 84 and through needle bearings (not shown) received in the axial bores (not shown) of second and third bevel gears 122, 124. The fourth bevel gear 126 of the differential 50 is pressed onto the input shaft 48. The input shaft 48 extends through a stepped axial bore in an end cap 74 and is pressed through bearings seated in the latter. The end cap 74 is then secured to the end of the carrier 72 as indicated, with the fourth bevel gear 126 engaging the second and third 122, 124, and the latter two engaging the first 114 to form the differential 50.

It will be understood that the first and fourth bevel gears 114, 126 are rigidly secured to the center shaft 70 and input shaft 48, respectively, whereas the second and third bevel gears 122, 124 are rotatably secured to the cross-shaft 120. When rotational torque is applied to the input shaft 48, it is transmitted through the differential 50 to the center shaft 70. If the center shaft 70 is free to rotate, then it will do so in response to rotation of the input shaft 48. However, if the center shaft 70 is constrained from rotating, then the torque is transmitted to the carrier 72 via the cross-shaft 120.

The rack gears 64, 66 are positioned in the transverse slots 90, 92 and in engagement with the pinion gears 116, 118. The valve plate 42 is held inside the mounting body 46 and the leaf spring 112 is depressed as the pivot mechanism 52 is extended through an access port 128 and the cavity 54 (FIG. 9) until the threaded end portion 78 projects through on opposite port 130 formed through the mounting body.

Two semi-annular baffles 132, 134 are positioned around the carrier 72 between the bearing 88 and the central portion 76, and against an annular rim or boss 138 of the mounting body 46. The inside-facing surfaces (those not visible in FIG. 2) of the baffles 132, 134 are contoured to conform with the inner surface 68 of the mounting body 46, and the surfaces are flush when the baffles are positioned as described.

The pivot mechanism 52 is further extended through the cavity 54 until the bearing 88 abuts an annular land 140 defined by the baffles 132, 134. A cover plate 142 abuts the opposite side of the bearing 88 and is secured to the mounting body 46 via screws (as at 144) extending through bores (as at 146) and into tapped bores (as at 148). The cover plate 142 circumferentially surrounds the end portion 80 and the latter, along with the input shaft 48, projects through a central bore 150 in the cover plate.

The rack gears 64, 66 are rigidly secured to the valve plate 42 via screws (as at 151) extending through the slots 56, 58 (FIG. 8) and into tapped bores (as at 152) formed in the rack gears. A bearing 136 is pressed into the port 130 between the cylindrical portion 78 and the mounting body 46, and the pivot mechanism 52 is finally secured by tightly engaging the nut 82 with the threaded end portion 78.

When the valve 40 is assembled, the center shaft 70 is centered in relation to the valve plate 42 so that, in use, the net fluid dynamic torque is substantially zero when the plate is in the closed position. The leaf spring 112 is preloaded and abuts one transversely-extending, inside surface 154 (FIG. 9) of the valve plate 42, while the rollers 104 on the other end of the carrier 72 abut the opposite transversely-extending, inside surface 156.

When the input shaft 48 is rotated, the rotational torque is transferred to the center shaft 70 and the normal response, in the absence of the leaf spring 112, is rotation of the center shaft 70. Rotation of the center shaft 70 is accompanied by translational movement 109 of the valve plate 42 relative to the carrier 72 via coaction of the rack and pinion gears 64, 66, 116, 118. If the translational movement is impeded sufficiently to prevent rotation of the center shaft 70, then the response to rotation of the input shaft 48 is rotation of the carrier 72 and, consequently, rotation of the valve plate 42. Since the oblong portion 76 of the carrier 72 is generally conformal with the cavity 54 (allowing, however, for translational movement and the provision of rollers 104), the valve plate 42 and carrier coact to rotate together when either is rotated; and since the cylindrical end portion 80 of the carrier extends outwardly from the flow path 44 and through the mounting body 46, the rotational position of the valve plate is easily ascertainable from the exterior of the mounting body by reference to the rotational position of the carrier.

Impedance of translational movement can occur without use of the leaf spring 112 when the valve plate 42 is in the closed position, since the plate is then forced edgewise against the inside surface 68 of the mounting body 46. However, such an arrangement requires considerably higher initial opening torque since the impedance is accompanied by frictional forces between the mounting body 46 and valve plate 42. Accordingly, the illustrated valve 40 incorporates a biasing mechanism so that rotational movement is the normal response when the valve plate 42 is moved from the closed position. In open rotational positions, the valve plate 42 moves rotationally in response to rotation of the input shaft 48 so long as impedance to rotational movement--the impedance resulting from net fluid dynamic torque--is insufficient to overcome the impedance to translational movement that results from the spring force. When the impedance to rotational movement is sufficiently high, (i.e. when the center of pressure 30 is sufficiently misaligned with the pivot axis 32 as illustrated in FIGS. 12, the pivot axis of the illustrated valve 40 being the longitudinal axis of the carrier 72), then the valve plate 42 moves translationally to decrease the net torque until the impedance is again insufficient to overcome that resulting from the spring force.

In applications-which demand sealing in the closed rotational position, a conventional rim seal can be provided around the circumferential periphery of the valve plate 42. This may limit translational movement too much, which in turn may require suitable shaping of the inside surface 68 of the mounting body 46 in order to accommodate the required movement. Alternatively, a suitably shaped inside surface 46 in combination with face seals may be workable. FIG. 13 illustrates a contemplated arrangement in which fluid communication is sealingly closed with the valve plate 42 at a rotational angle of approximately zero. The mounting body 46 is adapted to provide a suitable stop 158 in order to prevent undesired rotational movement of the valve plate 42. To accommodate translational movement, the inside surface 68 of the mounting body 46 is radially extended over a range 159 immediately downstream from an annular recess 160 formed in the circumferential edge of the valve plate 42. The recess 160 is offset from the carrier 72 to provide circumferentially continuous sealing. A seal 162 is seated in the recess 160 and abuts the inside surface 68. A potential difficulty in butterfly valves which employ rim seals in high-pressure-ratio applications is that the high-pressure fluid on the upstream side of the valve plate 42 gets between the recess 160 and the seal 162. The fluid exerts radially outward force on the seal 162, which puts the seal in more aggressive contact with the inside surface 68. While that effect may be desirable for sealing purposes, it has the undesirable consequence of increasing the torque required to initially open the valve. Accordingly, in the FIG. 13 arrangement the valve plate 42 is adapted to provide one-way fluid communication from the recess 160 to the downstream side of the plate in order to relieve the forementioned outward pressure exerted on the seal 162. This is accomplished by forming an inner annulus 164 which fluidically connects the recess 160 to a flow passage 166. The passage 166 extends from the annulus 164 to the downstream-facing surface of the valve plate 42, and is blocked by a check valve 168. A push rod 170 is rigidly secured to the carrier 72 and is in contact with the check valve 168 so that a very slight translational movement of the valve plate 42 results in opening the check valve. In the closed position illustrated, the seal 162 impedes rotational movement of the valve plate 42 to a greater degree than the spring 112 (FIG. 2) impedes translational movement. Accordingly, when the valve plate 42 is sealingly closed as shown, rotation of the input shaft 48 (FIG. 2) results in rotation of the center shaft 70, and the valve plate is translated very slightly relative to the carrier 72. This slight translational movement opens the check valve 168, thus relieving the radially outward pressure exerted on the seal 162 and decreasing impedance to rotational movement of the valve plate 42. Use of the check valve 168 for both biasing (i.e. as an equivalent to the leaf spring 112 of FIG. 2) and seal-venting purposes is a possibility that has not been fully explored.

Use of the valve 40 will be described with reference to FIGS. 12A-12F. The valve plate 20, which is initially at a first rotational position (FIG. 12A) maximally closing fluid communication along the flow path 44, is rotationally moved away from the first position toward a second rotational position (FIG. 12F) maximally permitting fluid communication. The valve plate 20 is subjected to a net torque exerted by the fluid conveyed along the path 44 and the net torque increases with the rotational movement as the center of pressure 30 moves below the pivot axis 32, this being illustrated in FIG. 12B. The valve plate 20 is translationally moved relative to the pivot shaft 22 so that the center of pressure 30 is more closely aligned with the pivot axis 32, thus decreasing the net torque, as illustrated in FIG. 12C. Continued rotational movement toward the second position (FIG. 12F), facilitated by the translational movement, is effected with a concomitant increase in the net torque as the center of pressure 30 again moves relative to the pivot axis 32, this being illustrated in FIG. 12D. Continued translational movement again more closely aligns the center of pressure 30 with the pivot axis 32 so that further rotational movement toward the second position (FIG. 12F) is facilitated, as indicated in FIG. 12E.

Rotational movement of the valve plate 20 continues until the plate reaches a desired rotational position (as in FIG. 12E) associated with a desired flow rate. The translational movement facilitates the rotational movement and, since the net torque exerted by the fluid on the plate is minimized via the translational movement, minimizes the load on the actuator 36 at the desired rotational position.

The overall movement of the valve plate is characterized by both rotational and translational components, although it may be substantially continuous between one rotational position and another. Thus, the progression indicated by FIGS. 12A-12E exaggerates the discreteness of successive translational or rotational components of movement, to the end of providing an easily understood illustration of the overall movement.

FIGS. 12G and 12H illustrate the movement in reverse. That is, starting from a rotational position such as that illustrated in FIG. 12E where the valve plate 20 is substantially torque-balanced, the plate is rotationally moved toward the first position (FIG. 12A), thus effecting a greater degree of misalignment between the center of pressure 30 and the pivot axis 32, as illustrated in FIG. 12G. The valve plate 20 is also translationally moved as illustrated in FIG. 12H to effect a lesser degree of misalignment, thus facilitating further rotational movement toward the first position.

FIG. 14 illustrates another valve 180 suitable for use with the invention, in which the pivot mechanism is the translationally movable element and is provided in the form of a shaft incorporating roller bearings. The valve plate 182 transects an elongate flow path 44 formed by a duct 184. Typically, the duct 184 is formed in part by a mounting body (46--FIG. 1) to which the plate 182 and other components are secured, and separate duct members are connected to the mounting body. The valve plate 182 is supported in the flow path 44 by support shafts (as at 186) which are formed as cylindrical bosses on the valve plate and which extend into slots (as at 188) formed in the duct 184. Alternatively, a single support shaft secured to the valve plate 182 may be used. The support shafts 186 incorporate roller bearings (as at 190) on their ends as indicated so that the valve plate 182 is freely rotatable over a range of rotational positions extending from a closed position (FIG. 14--the closed position being the position at which, in a given application, flow is maximally obstructed, whether or not completely obstructed via sealing contact) to a fully open position (FIG. 18--the fully open position being the position at which, in a given application, flow is minimally obstructed, whether or not the valve plate is parallel to the longitudinal direction of the flow path). The slots 188 are appropriately shaped and dimensioned to permit linear movement of the support shafts 186 in the longitudinal direction 192 of the flow path 44, while substantially preventing movement in directions transverse to both the support shafts and the foresaid longitudinal direction. The longitudinal axis 194 (FIG. 15) of the support shafts 186 defines the axis of rotation for the valve plate 182, and is centered in the flow path 44. A pivot shaft 196 incorporating roller bearings 198, 200 extends across the flow path 44 and through two arcuate slots (as at 202, FIG. 15) formed in opposing sides of the duct 184. The ends of the pivot shaft 196 are pressed into rotationally aligned gearplates 204, 206 so that the shaft is movable with the gearplates. The gearplates 204, 206 are rotatable about axially-aligned shafts 208, 210 which are rigidly secured to the duct 184 and journalled in the gearplates. Each of the gearplates 204, 206 has an arcuate rack gear (as at 212 in FIG. 16) formed in an arcuate edge of the plate. The rack gears 212 engage pinion gears 214, 216 that are rigidly secured to a control shaft 218. The control shaft 218 is journalled in the duct 184 and extends across the flow path 44. At least one end of the control shaft 218 projects from the valve 180 so that the shaft can receive torque applied thereto by an externally-disposed actuator 36. The duct 184 preferably includes cover plates 220, 222 to form a sealed enclosure permitting leakage of fluid through the arcuate slots 202, and easy access to the rack and pinion gears 212, 214, 216.

In use, the roller bearings 198, 200 abut the downstream-facing surface 224 (FIG. 15) of the valve plate 182 and the pivot shaft 196 bears the pressure exerted by high-pressure fluid on the upstream-facing surface 226 (FIG. 15) of the valve plate 182, except when the valve plate 182 nears the closed rotational position. While the support shafts 186 and valve plate 182 are substantially immovable in directions transverse to both the support shafts and the indicated longitudinal direction 192, a very small clearance sufficient to permit rolling movement of the roller bearings 190 in the slots 188 is provided. When the valve plate 182 is near the closed position (as indicated in FIG. 15, for example) and subjected to gravitational force, the support shafts 186 bear against the lower surface 228 (FIG. 17) of the slots 188. However, when the pivot shaft 196 is sufficiently low (as determined by reference to FIGS. 15, 17, 18, and 20) in the arcuate slots 202, the high-pressure fluid upstream from the valve plate 182 forces the latter very slightly upward so that the support shafts 186 bear against the upper surface 230 (FIG. 17) of the slots 188. Accordingly, the support shafts 186 function as a pivot shaft over a small range of rotational positions near the closed position, whereas the pivot shaft 196 performs that function over a substantial range of open rotational positions of the valve plate 182 in order to effect fluid-dynamic-torque adjustment. Use of the pivot shaft 196 as such requires that the support shafts 186 not be similarly operative in the forementioned range of rotational positions. On the other hand, the support shaft 186 is needed to ensure that the axis of rotation 194 remains centered in the flow path 44. In order to meet these requirements, movement of the valve plate 182 and support shafts 186 in the longitudinal direction 192 is provided for via the slots 188. Translational movement of the pivot shaft 196 relative to the valve plate 182 follows from rotational movement of the control shaft 218 via the gearplates 204, 206 and pinion gears 214, 216.

The valve plate 182 and pivot shaft 196 cooperate to define the pivot axis therebetween. The pivot axis is indicated by the numeral 232 and can be viewed in FIG. 15 as extending into and out from the drawing. The pivot axis 232 geometrically bisects the downstream-facing surface 224 into two areas which change with translational movement of the pivot shaft 196. When fluid is conveyed along the flow path 44 with the valve plate 182 in an open position, and when the pivot axis 232 is misaligned with the center of pressure exerted by the fluid on the valve plate, the fluid exerts a net torque on the plate about the pivot axis. To stabilize the valve plate 182 at an open rotational position, the pivot shaft 196 is moved so that the pivot axis 232 is as closely aligned with the center of pressure as possible. To move the valve plate 182 to a different rotational position, the pivot shaft 196 is moved to purposely misalign the center of pressure with the pivot axis 232 so that the high-pressure fluid rotates the valve plate in the desired direction. To effect initial opening, the pivot shaft 196 is moved downward past the center of pressure so that the valve plate moves rotationally away from the closed position in response to substitution of the pivot shaft 196 for the support shafts 186 as the operative pivot element, and to the consequent change in the position of the pivot axis 232 relative to the center of pressure.

Typically, the duct 184 is adapted to provide a mechanical stop (not shown) that prevents rotational movement of the valve plate 182 past the closed position in a direction viewed as counterclockwise in FIG. 15. In applications requiring complete obstruction of flow at the closed position, a circumferential rim seal is provided around the valve plate 182.

It should be understood that although the illustrated values 40, 180 have circular flow path/circular valve plate configurations, the invention is equally applicable to other configurations including that of a rectangular flow path/rectangular valve plate, and that the term "butterfly valve" as used herein is intended to include such other configurations to the extent that the teaching provided herein can be beneficially employed.

FIG. 21 illustrates a flight craft 240 aboard which a fluid system 242 is installed. The flight craft 240 may be a vehicle adapted for atmospheric flight, for space flight, or for both. Accordingly, the fluid system 242 may be one of the following, though it is not necessarily limited thereto: a bleed-air system, an environmental control system, a turbine starter system, a cabin pressurization system, an anti-ice system, or a subsystem of any of the above.

In FIG. 22, the fluid system 242 includes at least one butterfly valve 244 adapted to provide for relative translational movement (represented at 246) between the valve plate 248 and the pivot mechanism 250. The valve plate 248 is disposed in an elongate flow path formed by a supply duct 252 extending from a source 254 of pressurized fluid to one or more locations (represented by arrows 256, 258) of use for the fluid. The system 242 may further include a return duct (not shown) in specific applications. Exemplary sources of the fluid include turbofans, axial or centrifugal compressors, axial or centrifugal turbines, and pressurized tanks generally. A sensor 260 is suitably connected to the duct 252 to access the flow path at a location downstream from the valve 244. The sensor 260 may be any of a variety of devices suitable for use in measuring one or more physical characteristics (e.g. flow rate, pressure, temperature) of the fluid which are of interest in a specific application. The sensor 260 may be a capacitance-based or piezoelectric-based pressure transducer, an electrofluidic flow meter, a strain gauge, or a hot wire anemometer, for example. An actuator 36 is operably connected to the valve 244 to control the position of the valve plate 248 in response to control signals (represented by line 266) received from an electronic control system ("ECS") 264, which in turn responds to sensory data input signals (represented by line 262) received from the sensor 260. Typically, a shaft position encoder (not shown) or functionally equivalent device is provided to supply the ECS 264 with information indicating the rotational position of the valve plate 248. The actuator 36 may be any of a variety of suitable electromechanical devices such as DC motors, torque motors, stepper motors, or hydraulic or pneumatic motors in combination with solenoids, for example.

The reader should understand that the foregoing portion of the description, which description includes the accompanying drawings, is not intended to restrict the scope of the invention to the illustrated embodiments thereof or to specific details which are ancillary to the teaching contained herein. The invention should be construed in the broadest manner which is consistent with the following claims.

## Claims

1. A fluid system (242) installed aboard a flight craft (240), the fluid system comprising a source (254) of pressurized fluid, a duct (252) forming a flow path extending from the source to a location of use aboard the craft, and a valve (244) interposed in the flow path between the source and the location of use;
characterised in that the valve (244) is a butterfly valve having a rotatable valve member (248) and defining a pivot axis for the valve member, the valve member being secured to the duct so as to be rotatable in the flow path over a range of rotational positions that variably permits fluid flow from the source through the valve and to the location of use;
and in that the valve is structurally adapted to provide for relative translational movement (246) between the valve member (248) and the pivot axis in directions substantially parallel to the former and substantially perpendicular to the latter, whereby torque applied by the fluid on the valve member and about the pivot axis is alterable at each of a multiplicity of the rotational positions in response to the translational movement.

2. The fluid system of Claim 1 further comprising an actuator (36) operably connected to the valve (244) to position the valve member (248).

3. The fluid system of Claim 2 wherein the actuator (36) comprises an electric motor.

4. The fluid system of Claim 2 further comprising a sensor (260) adapted to respond to a change in a physical characteristic of the fluid, the sensor being operably connected to the duct (252) so as to access the flow path at a location between the valve and the location of use.

5. A butterfly valve (40,180) in which a valve plate (42,182) is selectively positionable within a range of rotational positions at which flow of fluid is permitted through the valve, the valve defining at each of the rotational positions in the range a pivot axis (32,232) about which the valve plate is pivotable and which geometrically divides a surface (224) of the valve plate into two areas,
characterized in that the valve is structurally adapted to provide for relative translational movement (248) between the valve plate and the pivot axis in directions substantially parallel to the valve plate and substantially perpendicular to the pivot axis such that the movement effects a decrease in one of the two areas and a corresponding increase in the other area, whereby the valve is operable at a multiplicity of the rotational positions of the valve plate to controllably alter torque exerted by the fluid on the valve plate and about the pivot axis.

6. The butterfly valve of Claim 5 further comprising a pivot shaft (196) cooperating with the valve plate to define the pivot axis, a control shaft (218) rotatable in response to external actuation, and operably engaged gears (214, 216, 204) connected to the control and pivot shafts for effecting the translational movement in response to rotation of the control shaft.

7. The butterfly valve of Claim 5 wherein the translational movement occurs as movement of the valve plate (42) relative to the remainder of the valve (40), and further comprising a shaft (70) operatively associated with the valve plate and having a longitudinal axis corresponding to the pivot axis (32), the translational movement being effected in response to rotational movement of the shaft when said torque exceeds a predetermined level thereof.

8. A method for facilitating control of a butterfly valve through which a fluid is being conveyed, wherein the valve comprises a valve plate which is rotationally positionable in a flow path to modulate flow of the fluid, and a pivot mechanism cooperating with the valve plate to define a pivot axis that geometrically divides a surface of the plate into two areas, the valve plate being pivotable about the axis so that the fluid exerts a net torque on the valve plate,
characterized in that the method comprises the step of:
for a plurality of different rotational positions of the valve plate which permit fluid flow through the valve, decreasing the net torque by effecting relative translational movement (248) between the pivot mechanism and the valve plate in a direction substantially parallel to the latter and substantially perpendicular to the pivot mechanism, wherein the translational movement is effected in a manner which increases one of the two areas and decreases the other.

## Patentansprüche

1. Ein an Bord eines fliegenden Fahrzeuges (240) installiertes Strömungssystem (242), welches eine Quelle (254) für unter Druck stehendes Strömungsmedium, eine Leitung (252) zur Bildung eines Strömungspfades, der sich von der Quelle zu einer an Bord des Fahrzeuges befindlichen Verwendungsstelle erstreckt, und ein Ventil (244) aufweist, das in den Strömungspfad zwischen die Quelle und die Verwendungsstelle eingesetzt ist;
dadurch gekennzeichnet, daß das Ventil (244) ein Drehklappenventil ist, welches ein verdrehbares Ventilglied (248) hat und eine Schwenkachse für das Ventilglied bildet, wobei das Ventilglied an der Leitung so befestigt ist, daß es im Strömungspfad über einen Bereich von Drehstellungen verschwenkbar ist, welcher den Strom des Strömungsmediums von der Quelle durch das Ventil und zur Verwendungsstelle variabel gestattet;
und daß das Ventil baulich eingerichtet ist für eine relative translatorische Bewegung (246) zwischen dem Ventilglied (248) und der Schwenkachse in Richtungen, die im wesentlichen parallel zu ersterem und im wesentlichen normal zu letzterer gerichtet sind, wodurch das vom Strömungsmedium auf das Ventilglied um die Schwenkachse aufgebrachte Drehmoment in jeder einer Vielzahl von Drehstellungen in Abhängigkeit von der translatorischen Bewegung veränderbar ist.

2. Strömungssystem nach Anspruch 1, welches weiters eine Betätigungsvorrichtung (36) aufweist, die mit dem Ventil (244) wirksam zur Einstellung des Ventilgliedes (248) verbunden ist.

3. Strömungssystem nach Anspruch 2, wobei die Betätigungsvorrichtung (36) einen Elektromotor aufweist.

4. Strömungssystem nach Anspruch 2, welches weiters einen Sensor (260) für eine Veränderung in einem physikalischen Kennzeichen des Strömungsmediums aufweist, welcher Sensor wirksam mit der Leitung (252) so verbunden ist, daß er Zugriff hat auf den Strömungspfad an einer Stelle zwischen dem Ventil und der Verwendungsstelle.

5. Ein Drehklappenventil (40,180), bei welchem eine Ventilplatte (42,182) wahlweise innerhalb eines Bereiches von Drehstellungen einstellbar ist, in welchen der Strömungsmitteldurchstrom durch das Ventil ermöglicht ist, wobei das Ventil in jeder der Drehstellungen des Bereiches eine Schwenkachse (32,232) bildet, um welche die Ventilplatte schwenkbar ist und welche eine Oberfläche (224) der Ventilplatte in zwei Bereiche geometrisch teilt,
dadurch gekennzeichnet, daß das Ventil baulich eingerichtet ist für die relative translatorische Bewegung (248) zwischen der Ventilplatte und der Schwenkachse in Richtungen, die im wesentlichen parallel zur Ventilplatte und im wesentlichen normal auf die Schwenkachse gerichtet sind, derart, daß die Bewegung eine Verringerung eines der zwei Bereiche bewirkt und eine entsprechende Vergrößerung des anderen Bereiches, wobei das Ventil in einer Vielzahl von Drehstellungen der Ventilplatte betriebsfähig ist, um das vom Strömungsmedium auf die Ventilplatte und um die Schwenkachse ausgeübte Drehmoment steuerbar verändern zu können.

6. Drehklappenventil nach Anspruch 5, welches weiters aufweist eine Schwenkwelle (196), welche mit der Ventilplatte zur Bildung der Schwenkachse zusammenwirkt, eine Steuerwelle (218), die in Abhängigkeit von äußerer Betätigung drehbar ist und wirksam in Eingriff stehende Getriebe (214,216,204), die mit den Steuer- und Schwenkwellen zur Hervorrufung der translatorischen Bewegung in Abhängigkeit von einer Verdrehung der Steuerwelle verbunden sind.

7. Drehklappenventil nach Anspruch 5, wobei die translatorische Bewegung als Bewegung der Ventilplatte (42) relativ zum übrigen Ventil (40) auftritt, und wobei ferner eine Welle (70) vorgesehen ist, die der Ventilplatte wirksam zugeordnet ist und eine Längsachse entsprechend der Schwenkachse (32) hat, wobei die translatorische Bewegung in Abhängigkeit von einer Rotationsbewegung der Welle hervorgerufen wird, wenn das erwähnte Drehmoment einen vorbestimmten Wert überschreitet.

8. Verfahren zur Erleichterung der Regelung eines Drehklappenventiles, durch welches ein Strömungsmedium geführt ist, wobei das Ventil eine drehbar in einem Strömungspfad zur Veränderung des Stromes des Strömungsmediums anzuordnende Ventilplatte und einen mit der Ventilplatte zur Bildung einer Schwenkachse zusammenarbeitenden Schwenkmechanismus aufweist, welche Schwenkachse eine Oberfläche der Platte in zwei Bereiche teilt, und wobei die Ventilplatte um die Achse schwenkbar ist, so daß das Strömungsmedium ein resultierendes Drehmoment auf die Ventilplatte ausübt,
dadurch gekennzeichnet, daß das Verfahren folgende Schritte aufweist:
Für eine Vielzahl von unterschiedlichen Drehstellungen der Ventilplatte, bei welchen ein Strom des Strömungsmediums durch das Ventil möglich ist, wird das verbleibende Drehmoment durch relative translatorische Bewegung (248) zwischen dem Schwenkmechanismus und der Ventilplatte herabgesetzt, wobei diese Bewegung in einer Richtung erfolgt, die im wesentlichen parallel zur Ventilplatte und im wesentlichen normal auf den Schwenkmechanismus verläuft, und wobei die translatorische Bewegung in einer Weise hervorgerufen wird, welche einen der beiden Flächenbereiche vergrößert und den anderen verkleinert.

## Revendications

1. Système hydraulique (242) installé à bord d'un aéronef (240), le système hydraulique comprenant une source (254) de fluide sous pression, une conduite (252) formant une voie d'écoulement s'étendant depuis la source jusqu'à un emplacement d'utilisation à bord de l'aéronef, et une vanne (244) disposée sur la voie d'écoulement entre la source et l'emplacement d'utilisation;
caractérisé en ce que la vanne (244) est une vanne-papillon ayant un élément de vanne rotatif (248) et définissant un axe de pivotement pour l'élément de vanne, l'élément de vanne étant fixé à la conduite de manière à pouvoir tourner dans la voie d'écoulement à l'intérieur d'une gamme de positions de rotation, permettant un flux de fluide variable depuis la source, par la vanne et à l'emplacement d'utilisation;
et en ce que la vanne est conçue par sa construction pour permettre un mouvement relatif de translation (246) entre l'élément de vanne (248) et l'axe de pivotement, dans une direction sensiblement parallèle au premier et sensiblement perpendiculaire au second, ce qui fait que le moment du couple exercé par le fluide sur l'élément de vanne et autour de l'axe de pivotement est modifiable à chacune des multiples positions de rotation, en réponse au mouvement de translation.

2. Système hydraulique de la revendication 1, comprenant en outre un dispositif de commande (36) connecté d'une manière opérationnelle à la vanne (244) pour positionner l'élément de vanne (248).

3. Système hydraulique de la revendication 2, dans lequel le dispositif de commande (36) comprend un moteur électrique.

4. Système hydraulique de la revendication 2, comprenant en outre un détecteur (260) conçu pour répondre à un changement d'une caractéristique physique du fluide, le détecteur étant connecté d'une manière opérationnelle à la conduite (252) de manière à avoir accès à la voie d'écoulement du fluide à un endroit entre la vanne et l'emplacement d'utilisation.

5. Vanne-papillon (40, 180) dans laquelle une plaque de vanne (42, 182) est positionnée d'une manière sélective à l'intérieur d'une gamme de positions de rotation permettant au flux de fluide de circuler dans la vanne, la vanne définissant à chacune des positions de rotation dans la gamme un axe de pivotement (32, 232) autour duquel la plaque de vanne peut tourner et qui divise géométriquement une surface (224) de la plaque de vanne en deux zones,
caractérisée en ce que la vanne est conçue par sa construction pour permettre un mouvement de translation relatif (248) entre la plaque de vanne et l'axe de pivotement dans une direction sensiblement parallèle à la plaque de vanne et sensiblement perpendiculaire à l'axe de pivotement, ce mouvement aboutissant à une diminution d'une des deux zones et une augmentation correspondante de l'autre zone, ce qui fait que la vanne peut être mise dans une multiplicité de positions de rotation de la plaque de vanne pour modifier d'une manière contrôlée le moment du couple exercé par le fluide sur la plaque de vanne et autour de l'axe de pivotement.

6. Vanne-papillon de la revendication 5, comprenant en outre un arbre de pivotement (196) coopérant avec la plaque de vanne pour définir l'axe de pivotement, un arbre de commande (218) pouvant tourner en réponse à une commande externe et des engrenages (214, 216 204) en prise opérationnelle et connectés aux arbres de commande et de pivotement pour effectuer le mouvement de translation en réponse à la rotation de l'arbre de commande.

7. Vanne-papillon de la revendication 5, dans laquelle le mouvement de translation s'effectue comme un mouvement de la plaque de vanne (42) par rapport au restant de la vanne (40) et qui comprend en outre un arbre (70) qui est associé d'une manière opérationnelle avec la plaque de vanne et qui a un axe longitudinal correspondant à l'axe de pivotement (32), le mouvement de translation étant effectué en réponse au mouvement de rotation de l'arbre lorsque ledit moment du couple dépasse un niveau prédéterminé.

8. Méthode pour faciliter la commande d'une vanne-papillon à travers laquelle circule un fluide, dans laquelle la vanne comprend une plaque de vanne qui est positionnée en rotation dans une voie d'écoulement pour moduler le flux de liquide et un mécanisme de pivotement coopérant avec la plaque de vanne pour définir un axe de pivotement qui divise géométriquement une surface de la plaque en deux zones, la plaque de vanne pouvant pivoter autour de l'axe de manière à ce que le fluide exerce un moment de couple net sur la plaque de vanne,
caractérisée en ce quel la méthode comprend l'étape consistant à :
diminuer le moment net du couple, pour une pluralité de différentes positions de rotation de la plaque de vanne permettant l'écoulement du fluide par la vanne, en assurant un mouvement relatif de translation (248) entre le mécanisme de pivotement et la plaque de vanne dans une direction sensiblement parallèle à cette dernière et sensiblement perpendiculaire au mécanisme de pivotement, le mouvement de translation ayant pour effet d'augmenter une des deux zones et de diminuer l'autre.
